# EUROPÄISCHE PATENTSCHRIFT

(11) **EP 0 807 748 B1**
(45) Veröffentlichungstag und Bekanntmachung des Hinweises auf die Patenterteilung: **02.10.2002**
(21) Anmeldenummer: 97107905.8
(22) Anmeldetag: 15.05.1997
(51) Int. Cl.: F01M 11/00, F01M 1/02, F01M 11/03

(54) **Brennkraftmaschine**
Internal combustion engine
Moteur à combustion interne

(30) Priorität: 17.05.1996 DE 19619977
(43) Veröffentlichungstag der Anmeldung: 19.11.1997
(73) Patentinhaber: DaimlerChrysler AG, 70567 Stuttgart (DE); FILTERWERK MANN & HUMMEL GMBH, 71638 Ludwigsburg (DE)
(72) Erfinder: Esebeck, Götz, Frhr, von Dr., 10585 Berlin (DE); Reif, Renée, 73773 Aichwald (DE); Dürrstein, Rolf, Dr., 74321 Bietigkheim (DE); Ostertag, Robert, 75235 Tiefenbronn (DE); Weindorf, Martin, 70806 Kornwestheim (DE)

(56) Entgegenhaltungen:
- DE-A- 4 206 068
- US-A- 1 595 432
- US-A- 2 239 447
- US-A- 2 318 276
- US-A- 4 223 073
- US-A- 5 408 965

## Beschreibung

Die Erfindung betrifft eine Ölwanne für eine Brennkraftmaschine nach der im Oberbegriff von Anspruch 1 näher definierten Art.

Die US-A-1 595 432 beschreibt eine gattungsgemäße Ölwanne für eine Brennkraftmaschine. Hierbei sind jedoch die relativ vielen Einzelteile der Anlage sowie die komplizierte Montage nachteilig.

Eine weitere, ähnliche Ölwanne ist aus der DE-A-42 06 068 bekannt. Die dort beschriebene Ölwanne weist sehr viele kostenverursachende Einzelteile auf, welche auch den Montageaufwand entsprechend erhöhen.

Bei Verbrennungsmotoren werden im allgemeinen im Ölkreislauf im wesentlichen lediglich Einzelkomponenten, wie ölfilter, ölpumpe, Ölwanne, Ölkühler, Sensoren und weitere hierfür erforderliche Aggregate, verwendet.

Aus der DE-OS 29 22 695 ist eine Anordnung eines Schmierölfilters und einer Schmierölpumpe in einem unterhalb des Motores angeordneten Gehäuse, welches auch als Ölwanne dient, bzw. diese umfaßt, bekannt.

Aus der DE-OS 29 23 993 ist eine einteilig gegossene ölwanne für Brennkraftmaschinen bekannt, wobei an die Ölwanne an ihrer Außenseite eine Aufnahme für ein Ölfiltergehäuse angeformt ist. Weiterhin ist die Ölwanne mit Ölkanälen versehen.

Eine zweiteilige Ölwanne ist aus der DE-OS 42 42 513 bekannt. Ein Wannenabschnitt enthält dabei einen kastenartigen ölfilter.

Der vorliegenden Erfindung liegt die Aufgabe zugrunde, eine Brennkraftmaschine der eingangs erwähnten Art zu schaffen, wobei möglichst alle oder wenigstens die wichtigsten Funktionen und Bauteile des Ölkreislaufes zu einer Baugruppe zusammengefaßt sind, welche einbaufertig ausgebildet ist. Hierbei soll eine sichere Funktion der Brennkraftmaschine gewährleistet sein.

Erfindungsgemäß wird diese Aufgabe durch die in Anspruch 1 genannten Merkmale gelöst.

Durch die Ausbildung der Ölwanne wird ein sogenanntes Ölmodul geschaffen, das nach einer entsprechenden Vormontage aller Einzelteile als Gesamtheit mit der Brennkraftmaschine verbunden werden kann.

Diese Integration des Ölkreislaufes in die Ölwanne erspart viele separate Bauteile, wie Ansaugrohre, Filtergehäuse, Kühlergehäuse und ähnliches. Neben der erleichterten Montage und zu Wartungs- oder Reparaturzwecken einer erleichterten Demontage bringt die erfindungsgemäße Lösung auch Kosten- und Gewichtsvorteile bei der Herstellung einer Brennkraftmaschine.

Besonders vorteilhaft ist dabei, daß Wandteile der ölwanne wenigstens Teile von Gehäusen der Einzelaggregate des Ölkreislaufes, wie z.B. Ölfiltergehäuse und Ölkühler bilden.

Durch den erfindungsgemäß als Steigleitung ausgebildeten Druckkanal von der Ölpumpe zu dem ölfilter, dessen höchster Punkt über dem normalen Ölstands-Niveau der ölwanne liegt, wird ein Leerlaufen der ölkanäle auch ohne Rücklaufsperre verhindert.

Vorteilhafte Ausgestaltungen und Weiterbildungen der Erfindungen ergeben sich aus den Unteransprüchen und aus den nachfolgend anhand der Zeichnung prinzipmäßig beschriebenen Ausführungsbeispielen.

Es zeigt:
- Fig. 1: einen Vertikalschnitt nach der Linie I-I der Fig. 2 durch eine Ölwanne,
- Fig. 2: eine teilweise Draufsicht auf die Ölwanne nach der Fig. 1,
- Fig. 3: einen Schnitt nach der Linie III-III der Fig. 2.
- Fig. 4: einen Vertikalschnitt nach der Linie IV-IV der Fig. 5 in einer zweiten Ausgestaltung einer Ölwanne,
- Fig. 5: eine Draufsicht (teilweise) auf eine Ölwanne,
- Fig. 6: einen Schnitt nach der Linie VI-VI der Fig. 4,
- Fig. 7: einen Schnitt nach der Linie VII-VII der Fig. 5.

Grundsätzlich ist die Ölwanne nebst darin integrierten Einrichtungen für einen Ölkreislauf von bekannter Bauart, weshalb nachfolgend nur die für die Erfindung wesentlichen Teile näher beschrieben werden.

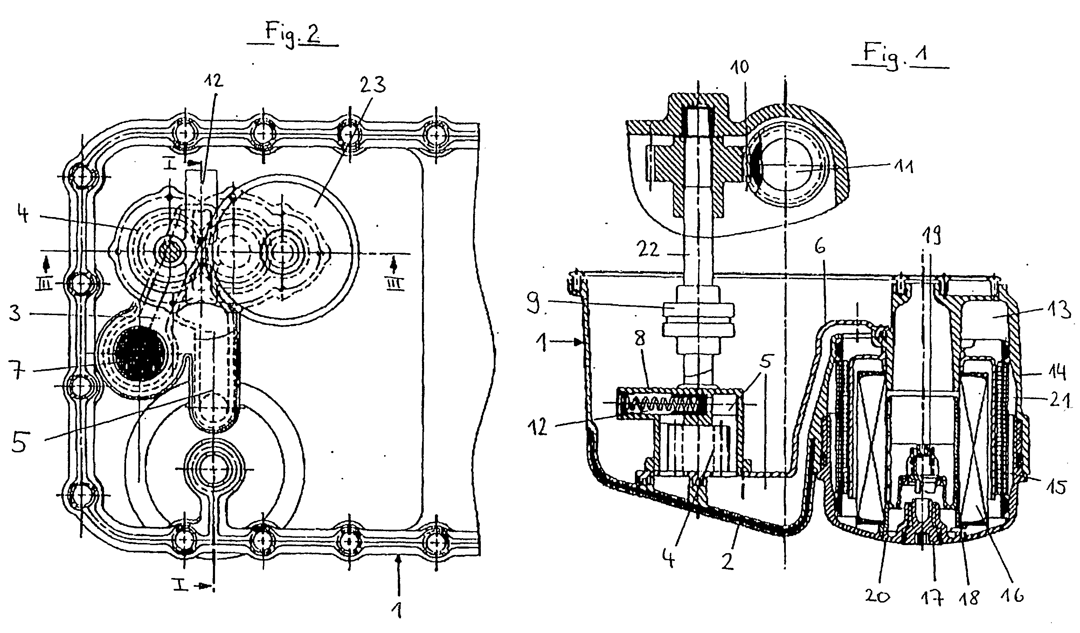

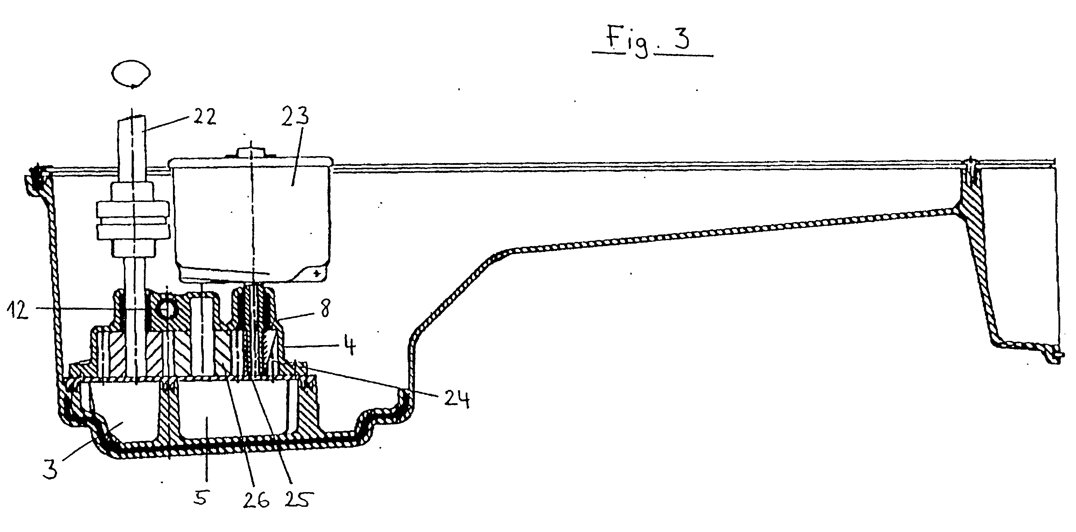

Gemäß Ausführungsbeispiel nach den Fig. 1 bis 3 ist die als Integrationsbauteil hergestellte Ölwanne 1 aus Kunststoff oder Aluminium mit einem umspritzten Blechbodenelement 2 hergestellt, um beim mißbräuchlichen Aufsetzen der Ölwanne 1 ein Brechen oder Reißen zu verhindern. Auf diese Weise wird sichergestellt, daß die Ölspeicherfunktion der Ölwanne 1 eingehalten wird. Ein Ölansaugkanal 3 einer Ölpumpe 4 und ein von der Ölpumpe 4 abgehender Druckkanal 5 werden als Steigleitung ausgebildet. Dadurch wird ein Leerlaufen der Ölkanäle 3, 5 und eines Ölfilters 16, der hier nicht näher beschrieben wird, auch ohne Rücklaufsperre verhindert. Die Steigleitung wird auf der Oberseite mit einem Kunststoffdeckel 6 mit einem Ansaugsieb 7 abgedeckt. Der Kunststoffdeckel 6, welcher die Ölpumpe 4 auf der Unterseite über eine Dichtung abschließt, wird auf beliebige Weise, z.B. durch Verschweißen, mit der Ölwanne verbunden. Durch diese Ausgestaltung wird ein geschlossener Druckkanal, der gleichzeitig auch als Saugleitung dient, für das von der Ölpumpe 4 gelieferte Drucköl gebildet. Gleichzeitig stellt der Deckel 6 damit auch eine Befestigungseinrichtung für die Ölpumpe 4 in der Ölwanne 1 dar.

Als Ölpumpe 4 kann eine Außenzahnradpumpe bekannter Bauart gewählt werden, die in einem Kunststoff- bzw. Aluminiumdruckgußgehäuse 8 angeordnet ist. Das Aluminiumdruckgußgehäuse 8 ist über eine nicht näher dargestellte Dichtung auf den Deckel 6 geschraubt. Die Pumpe 4 wird über einen Antrieb 22 mit einem Winkelgetriebe 10 von einer Kurbelwelle 11 des Verbrennungsmotores aus angetrieben. In den Antrieb 22 ist eine elastische Wellenkupplung 9 integriert.

Ein Druckregelventil 12 für die Ölpumpe 4 ist als Kolbenventil ausgebildet.

Das von der Ölpumpe 4 geförderte Öl wird über den Druckkanal 5 in Form einer Steigleitung in einen oberen Ringraum 13 eines Filtergehäuses 14, das als Wandteil der Ölwanne 1 ausgeführ ist, gefördert. Von dem Ringraum 13 aus durchströmt das Öl einen Öl-Wasser-Ringkühler 15, der aus zwei mantelförmig gebogenen Kühlblechen besteht, die auf einem Blechrohr verlötet sind. Der untere Teil des Filtergehäuses 14 bildet gleichzeitig eine Wasserseite 21. Die Wasserseite 21 ist über entsprechende Anschlüsse mit dem Kühlwasserkreislauf der Verbrennungsmaschine verbunden.

Nach Durchgang durch den Kühler 15 durchströmt das Öl ein Filtermittel, das z.B. in bekannter Weise als metallfreie Filterpatrone bzw. Ölfilter 16 ausgeführt ist.

Eine Ölablaßschraube 17, ein Mittelrohr 18 und ein Filterumgehungsventil 19 können ebenfalls aus Kunststoff bestehen und sind in einem Ölfilterdeckel 20 integriert. Diese Ausgestaltung ermöglicht einen sauberen Filterwechsel durch ein vollständiges Entleeren des Öles im Filterraum. Das metallfreie Filterelement in Form einer Patrone bzw. der Ölfilter 16 kann einem Recyclingprozeß zugeführt werden. Alle übrigen Bauteile können im Produktlebenszyklus weiterverwendet werden.

Über nicht näher dargestellte Dichtungen kann die Ölwanne 1 mit allen vorstehend beschriebenen Einrichtungsteilen an der Unterseite des Kurbelwellengehäuses (nicht dargestellt) befestigt werden.

In der Ölwanne 1 ist weiterhin eine Zentrifuge 23 aufgenommen. Die Zentrifuge 23 wird über ein Ritzel 24 angetrieben, das mit einem Zahnrad 26 der Ölpumpe 4 kämmt. Im allgemeinen wird man die Drehzahl der Ölpumpenräder ins "Schnelle" übersetzen. Über eine Bohrung 25 wird der Zentrifuge 23 von dem Druckkanal 5 aus ein Teil des Abregelstroms des Öles für eine Feinstreinigung zugeführt.

Das Druckregelventil 12, das in gleicher Weise wie das Regelventil nach den Fig. 1 bis 3 als Kolbenventil ausgebildet ist, regelt bei einem bestimmten Öldruck zuviel gefördertes Öl direkt zum Saugkanal 3 hin ab, womit eine interne Druckabregelung vorliegt. Dies bedeutet, daß nur das vom Verbrennungsmotor benötigte Öl angesaugt werden muß. Auf diese Weise wird eine Verbesserung des Kavitationsverhaltens und einer Geräuschabstrahlung der Ölpumpe 4 erreicht.

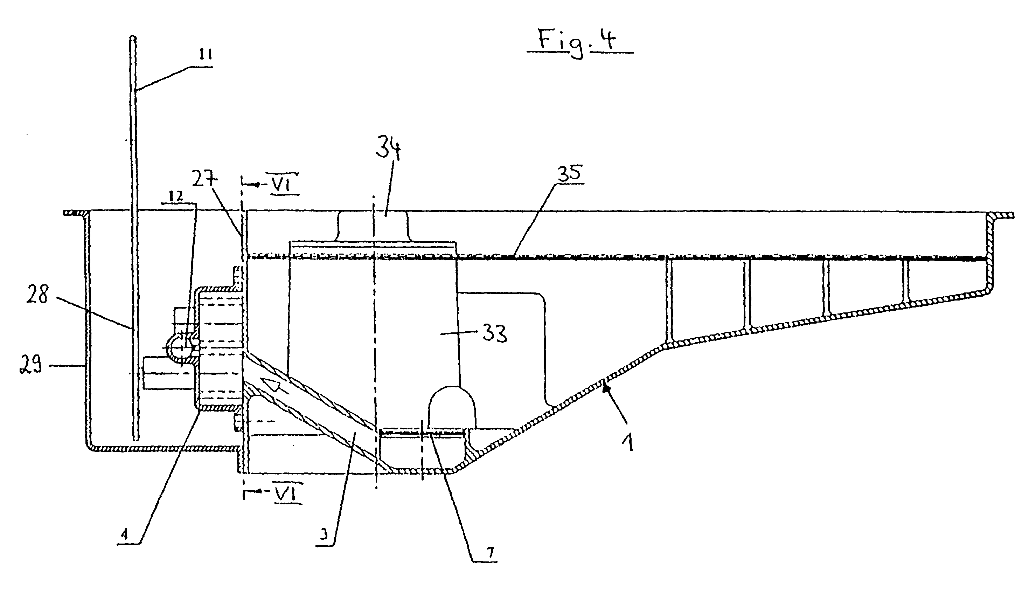

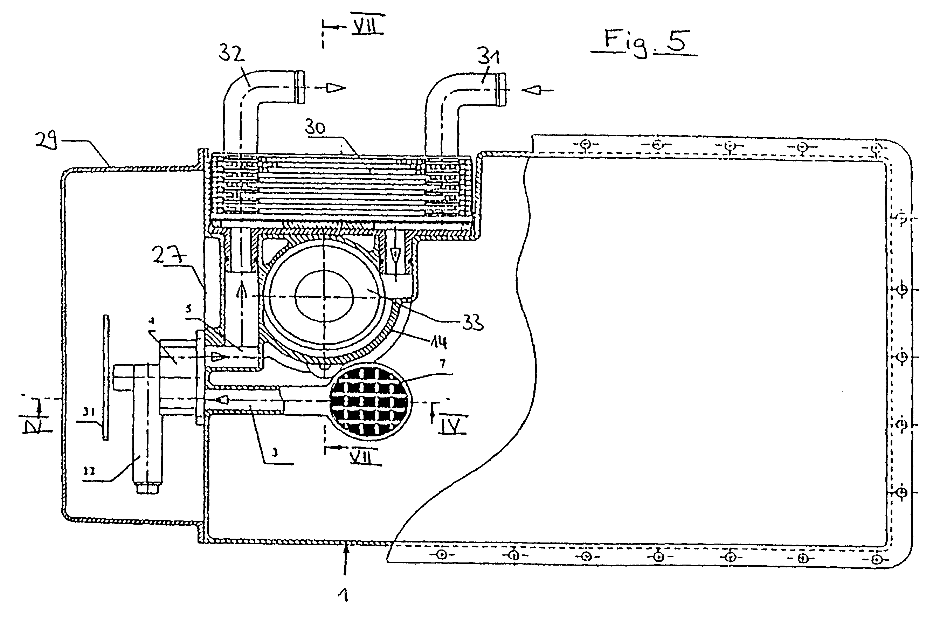

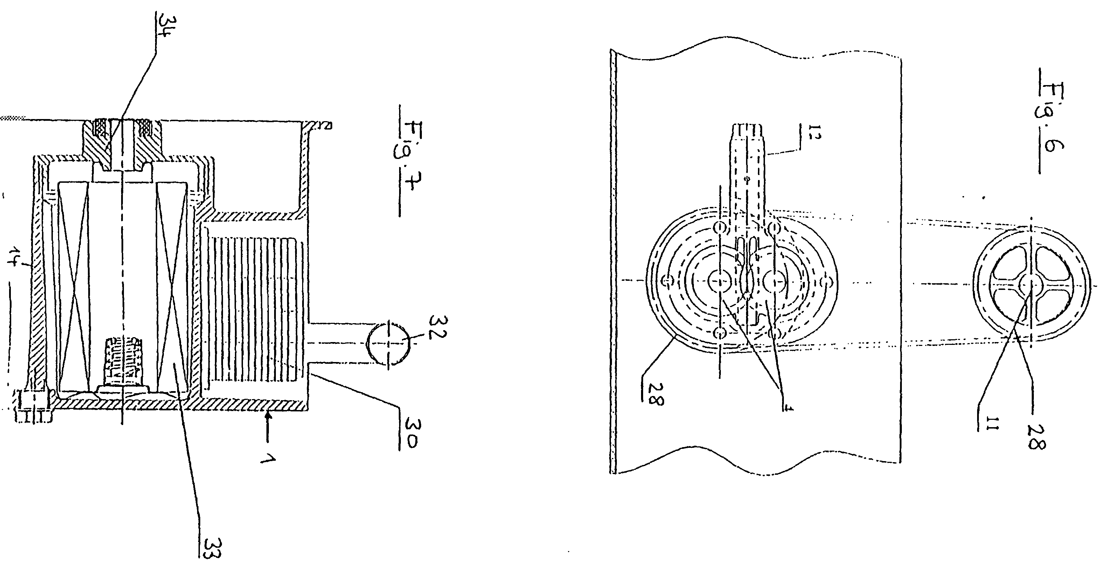

Ein zweites Ausführungsbeispiel zur Realisierung des Modulgedankens ist in den Fig. 4 bis 7 dargestellt. Dabei besteht die Ölwanne 1 aus zwei Kunststoff- bzw. Aluminiumdruckgußteilen. Die Ölwanne 1 weist vorne - bezogen auf die Fahrtrichtung - eine Flanschfläche 27 auf, auf der die Ölpumpe 4 mit dem Druckregelventil 12 über eine Dichtung befestigt ist. Der Antrieb der Ölpumpe 4 erfolgt dabei über einen einfachen Kettentrieb 28 von der Kurbelwelle 11 aus. Der vordere Teil der Ölwanne 1 wird in dem Teil, in dem sich die Ölpumpe 4 befindet, von einem Deckel 29 abgeschlossen, der in vorteilhafter Weise den Steuergehäusedeckel des Verbrennungsmotores darstellt.

Der Saugkanal 3 und der Druckkanal 5 werden durch Taschen in dem Aluminiumdruckguß realisiert und nach dem Guß von der Flanschfläche 27 aus entformt. Das Ansaugsieb 7 ist auch in diesem Falle als einfaches Kunststoffteil ausgebildet, das in eine entsprechende Ausnehmung der Ölwanne 1 eingeschnappt wird.

Bei diesem Ausführungsbeispiel gelangt das Öl von dem Druckkanal 5 aus in einen in die Ölwanne 1 integrierten und seitlich an diese angeflanschten Plattenwärmetauscher 30. Der Plattenwärmetauscher 30 kann von bekannter Bauart sein. Über einen Zulaufstutzen 31 und einen Rücklaufstutzen 32 ist der Plattenwärmetauscher 30 in den Kühlwasserkreislauf des Verbrennungsmotores integriert.

Von dem Plattenwärmetauscher 30 aus strömt das Öl durch ein Lebensdauerfilterelement 33 zu den Schmierstellen des Motores. Selbstverständlich kann statt einem Lebensdauerfilterelement 33 auch eine auswechselbare Filterpatrone bei diesem Ausführungsbeispiel vorgesehen sein. Das Filtergehäuse 14, das auch bei diesem Ausführungsbeispiel ein Teil der Ölwanne 1 ist, wird von einem einfachen Deckel auf der Oberseite verschlossen, wobei der Deckel 34 keinen besonderen Dichtigkeitsanforderungen genügen muß.

Um eine Ölverschäumung zu minimieren, wird ein Kunststoffgitter 35 mit umspritzten Siebgewebe zusätzlich in die Ölwanne integriert und mit dieser z.B. über ein Klemm- oder Schnappsystem verbunden. Das Kunststoffgitter 35 befindet sich dabei über dem höchsten Füllstandsniveau für Öl in der Ölwanne 1.

Zusätzlich können in die Ölwanne 1 noch weitere Sensoren, z.B. Druck-, Temperatur-, Füllstandssensoren oder ähnliche an den entsprechenden Stellen, wie z.B. in den Druckkanal 5 eingesetzt werden. Dies kann z.B. durch ein Verschrauben erfolgen.

## Patentansprüche

1. ölwanne für eine Brennkraftmaschine mit in das Gehäuse der ölwanne eingeformten Ölkanälen, wobei die Ölwanne zusammen mit einem ölfilter und einer Ölpumpe als Einheit an die Brennkraftmaschine montierbar und/oder demontierbar ist, und wobei die Ölpumpe (4) innerhalb der ölwanne (1) angeordnet ist, wobei ein Ölfiltergehäuse (14) mit dem Ölfilter (16) innerhalb der Ölwanne (1) angeordnet und mit derselben verbunden ist, wobei wenigstens ein Teil des Ölfiltergehäuses (14) durch einen Wandabschnitt der Ölwanne (1) selbst gebildet ist.
**dadurch gekennzeichnet, daß**
der von der Ölpumpe (4) zu dem Ölfilter (16) führende Druckkanal (5) als Steigleitung ausgebildet ist, deren höchster Punkt über dem normalen Ölstands-Niveau der Ölwanne (1) liegt.

2. Ölwanne nach Anspruch 1,
**dadurch gekennzeichnet, daß**
in der Ölwanne (1) eine Zentrifuge (23) angeordnet ist.

3. Ölwanne nach Anspruch 1 oder 2,
**dadurch gekennzeichnet, daß**
die Ölpumpe (4) auf einem Deckel (6) gelagert ist, der gleichzeitig eine Befestigungseinrichtung für die Ölpumpe (4) in der Ölwanne (1) bildet.

4. Ölwanne nach einem der Ansprüche 1 bis 3,
**dadurch gekennzeichnet, daß**
in der Ölwanne (1) ein Ölkühler (15,30) angeordnet ist.

5. Ölwanne nach Anspruch 4,
**dadurch gekennzeichnet, daß**
der Ölkühler als Öl-Wasser-Ringkühler (15) ausgebildet ist.

6. Ölwanne nach Anspruch 4,
**dadurch gekennzeichnet, daß**
der Ölkühler als Plattenwärmetauscher (30) ausgebildet ist, der an die Ölwanne (1) angeflanscht ist.

7. Ölwanne nach einem der Ansprüche 1 bis 6,
**dadurch gekennzeichnet, daß**
die Ölwanne (1) aus Kunststoff mit einem umspritzten Blechbodenelement (2) hergestellt ist.

8. Ölwanne nach einem der Ansprüche 1 bis 7,
**dadurch gekennzeichnet, daß**
die Ölwanne (1) als zweiteilige Aluminiumdruckgußwanne ausgebildet ist, wobei die Ölpumpe (4) an einer Flanschfläche (27) der ölwanne (1) angeflanscht ist, wobei der Teil der Ölwanne (1), in dem sich die Ölpumpe (4) befindet durch einen Steuergehäusedeckel (29) für die Brennkraftmaschine abgedeckt ist.

9. ölwanne nach einem der Ansprüche 1 bis 8,
**dadurch gekennzeichnet, daß**
die Ölwanne (1) mit einem sich wenigstens annähernd in horizontaler Richtung erstreckenden Gitter (35) versehen ist.

10. Ölwanne nach einem der Ansprüche 1 bis 9,
**dadurch gekennzeichnet, daß**
in die Ölwanne (1) Sensoren wie Druck-, Temperatur-, Füllstandssensoren und dergleichen eingesetzt sind.

## Claims

1. Oil sump for an internal combustion engine with oil ducts moulded into the housing, the oil sump together with an oil filter and an oil pump being mountable and/or de-mountable on the internal combustion engine as a single unit, and the oil pump (4) being disposed inside the oil sump (1), an oil filter housing (14) with the oil filter (16) being disposed inside and joined to the oil sump (1), at least a part of the oil filter housing (14) being formed by a wall section of the oil sump (1) itself,
**characterised in that**
the pressure duct (5) leading from the oil pump (4) to the oil filter (16) is designed as an ascending line, the highest point of which lies above the normal level of the oil in the oil sump (1).

2. Oil sump as claimed in claim 1,
**characterised in that**
a centrifuge (23) is disposed in the oil sump (1).

3. Oil sump as claimed in claim 1 or 2,
**characterised in that**
the oil pump (4) is mounted on a cover (6), which simultaneously serves as a means for fixing the oil pump (4) in the oil sump (1).

4. Oil sump as claimed in one of claims 1 to 3,
**characterised in that**
an oil radiator (15, 30) is arranged in the oil sump (1).

5. Oil sump as claimed in claim 4,
**characterised in that**
the oil radiator is designed as an oil-water-annular radiator (15).

6. Oil sump as claimed in claim 4,
**characterised in that**
the oil radiator is provided in the form of a plate heat exchanger (30), flange-mounted on the oil sump (1).

7. Oil sump as claimed in one of claims 1 to 6,
**characterised in that**
the oil sump (1) is made from plastics with a sheet metal base element (2) moulded around it.

8. Oil sump as claimed in one of claims 1 to 7,
**characterised in that**
the oil sump (1) is provided in the form of a two-part die-cast aluminium sump, the oil pump (4) being flange-mounted on a flanged face (27) of the oil sump (1), and the part of the oil sump (1) in which the oil pump (4) is located is covered by a control housing cover (29) for the internal combustion engine.

9. Oil sump as claimed in one of claims 1 to 8,
**characterised in that**
the oil sump (1) is provided with at least one grating (35) extending at least more or less in a horizontal direction.

10. Oil sump as claimed in one of claims 1 to 9,
**characterised in that**
sensors such as pressure, temperature, level sensors and similar are employed in the oil sump (1).

## Revendications

1. Cuve à huile pour un moteur à combustion interne, comportant des canaux à huile conformés dans le carter de la cuve à huile, la cuve à huile pouvant être montée et/ou démontée conjointement avec un filtre à huile et une pompe à huile sous forme d'unité sur ou depuis le moteur à combustion interne, et la pompe à huile (4) étant agencée à l'intérieur de la cuve à huile (1), un carter de filtre à huile (14) comportant un filtre à huile (16) étant agencé à l'intérieur de la cuve à huile (1) et étant relié à celle-ci, une partie au moins du carter de filtre à huile (14) étant formée par un tronçon de paroi de la cuve à huile (1) elle-même, **caractérisée en ce que** le canal sous pression (5) menant depuis la pompe à huile (4) jusqu'au filtre à huile (16) est réalisé sous forme de conduite montante dont le point le plus haut se trouve au-dessus du niveau d'huile normal de la cuve à huile (1).

2. Cuve à huile selon la revendication 1, **caractérisée en ce qu'**une centrifugeuse (23) est agencée dans la cuve à huile (1).

3. Cuve à huile selon l'une ou l'autre des revendications 1 et 2, **caractérisée en ce que** la pompe à huile (4) est montée sur un couvercle (6) qui forme simultanément un dispositif de fixation pour la pompe à huile (4) dans la cuve à huile (1).

4. Cuve à huile selon l'une des revendications 1 à 3, **caractérisée en ce qu'**un refroidisseur d'huile (15, 30) est agencé dans la cuve à huile (1).

5. Cuve à huile selon la revendication 4, **caractérisée en ce que** le refroidisseur d'huile est réalisé sous forme de refroidisseur annulaire huile-eau (15).

6. Cuve à huile selon la revendication 4, **caractérisée en ce que** le refroidisseur d'huile est réalisé sous forme d'échangeur de chaleur à plaques (30) qui est bridé sur la cuve à huile (1).

7. Cuve à huile selon l'une des revendications 1 à 6, **caractérisée en ce que** la cuve à huile (1) est fabriquée en matière plastique avec un élément de fond en tôle (2) surmoulée.

8. Cuve à huile selon l'une des revendications 1 à 7, **caractérisée en ce que** la cuve à huile (1) est réalisée sous forme de cuve en aluminium coulée sous pression en deux pièces, la pompe à huile (4) étant bridée sur une surface de bride (27) de la cuve à huile (1), la partie de la cuve à huile (1) dans laquelle se trouve la pompe à huile (4) étant recouverte par un couvercle de carter de commande (29) pour le moteur à combustion interne.

9. Cuve à huile selon l'une des revendications 1 à 8, **caractérisée en ce que** la cuve à huile (1) est pourvue d'une grille (35) qui s'étend au moins approximativement en direction horizontale.

10. Cuve à huile selon l'une des revendications 1 à 9, **caractérisée en ce que** des palpeurs, tels que des palpeurs de pression, de température, de niveau de remplissage et similaires sont mis en place dans la cuve à huile (1).
